(19) Europäisches Patentamt
European Patent Office
Office européen des brevets

(11) **EP 3 945 349 B1**

(12) **EUROPEAN PATENT SPECIFICATION**

(45) Date of publication and mention
of the grant of the patent:
**16.10.2024  Bulletin 2024/42**

(21) Application number: **20188988.8**

(22) Date of filing: **31.07.2020**

(51) International Patent Classification (IPC):
*G01S 17/894* $^{(2020.01)}$   *G01S 17/86* $^{(2020.01)}$
*G01S 7/48* $^{(2006.01)}$   *G01S 17/931* $^{(2020.01)}$
*G01S 17/87* $^{(2020.01)}$   *G06T 7/586* $^{(2017.01)}$

(52) Cooperative Patent Classification (CPC):
**G01S 17/894; G01S 7/4802; G01S 17/86;
G01S 17/931; G06T 7/586;** G06T 2207/10028;
G06T 2207/30252

(54) **METHOD AND SYSTEM FOR DETERMINING 3D IMAGE INFORMATION**

VERFAHREN UND SYSTEM ZUR BESTIMMUNG VON INFORMATIONEN EINES 3D-BILDES

PROCÉDÉ ET SYSTÈME PERMETTANT DE DÉTERMINER DES INFORMATIONS D'IMAGE 3D

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.02.2022  Bulletin 2022/05**

(73) Proprietor: **Continental Autonomous Mobility
Germany GmbH
85057 Ingolstadt (DE)**

(72) Inventor: **Kabai, Robert-Zsolt
90411 Nürnberg (DE)**

(74) Representative: **Continental Corporation
c/o Continental Automotive GmbH
Intellectual Property
Nordostpark 30
90411 Nürnberg (DE)**

(56) References cited:
**WO-A1-2020/104423    US-A1- 2019 362 198**

• **FANGCHANG MA ET AL: "Self-Supervised
Sparse-to-Dense: Self-Supervised Depth
Completion from LiDAR and Monocular Camera",
LATER IN: 2019 INTERNATIONAL CONFERENCE
ON ROBOTICS AND AUTOMATION (ICRA), 3 July
2018 (2018-07-03), XP055655795, Retrieved from
the Internet
<URL:https://arxiv.org/abs/1807.00275>
[retrieved on 20200108], DOI:
10.1109/ICRA.2019.8793637**
• **SAMAL KRUTTIDIPTA ET AL: "Hybridization of
Data and Model based Object Detection for
Tracking in Flash Lidars", 2020 INTERNATIONAL
JOINT CONFERENCE ON NEURAL NETWORKS
(IJCNN), IEEE, 19 July 2020 (2020-07-19), pages
1 - 6, XP033832000, DOI:
10.1109/IJCNN48605.2020.9207677**

**EP 3 945 349 B1**

**Description**

The present invention relates generally to the field of neural networks, specifically deep neural networks. More specifically, the invention relates to a method and a system for determining 3D image information of a scene in the surrounding of the vehicle. Said 3D image information may be preferably used for deciding if a detected object can be traversed by the vehicle or not.

Emergency Braking and Obstacle Detection for autonomous driving is a critical function that is usually based on camera-only information. Using a low resolution LIDAR (LIDAR: light detection and ranging) for the task is rather difficult as it is very difficult to decide the objectness of a region inside a scene with only a few laser points.

Camera based solutions lack the power and robustness to identify rare objects and distinguish between flat objects that are safe to drive through and objects that cannot be traversed by the vehicle and therefore emergency braking is necessary.

Multi-sensor setups usually use late fusion e.g. camera and radar or concatenation based fusion approaches. The performance of the results are capped by information received from the individual sensors. Camera based object detection lacks distance information; LIDAR based object detection performs poorly in case of a low resolution LIDAR sensor, radars fail to detect non-metallic objects, while fusion-based methods are yet very primitive and usually involve simple concatenation of features either early in the learning chain, called early-fusion or using a voting scheme for per-sensor predictions, called late fusion.

Document WO 2020/104423 A1 discloses a method and an apparatus for data fusion of LIDAR data and image data, and more particularly to sensor fusion in transportation vehicles for obtaining a consistent environment model for assisted or automated driving.

Document US 2019/362198 A1 discloses a method for detecting a presence of a physical divider on a road segment.

SAMAL KRUTTIPIPTA et al: "Hybridization of Data and Model based Object Detection for Tracking in Flash Lidars" 2020 INTERNATIONAL JOINT CONFERENCE ON NEURAL NETWORKS (IJCNN), IEEE, 19 July 2020, XP033832000, discloses a data driven deep learning based flash lidar object detector and tracker.

It is an objective of the embodiments of the invention to provide a method for determining 3D image information which provides a highly reliable detection of 3D information of objects in the surrounding scene. The objective is solved by the features of the independent claims. Preferred embodiments are given in the dependent claims. If not explicitly indicated otherwise, embodiments of the invention can be freely combined with each other.

According to an aspect, the invention refers to a method for determining 3D image information of a scene in the surrounding of a vehicle based on information provided by a camera and a flash LIDAR sensor. The method comprises the following steps:
First, image information from the camera is received, said image information referring to a first coverage area. The camera may be a digital camera providing image information in a pixelated manner in multiple channels, e.g. one channel for each color of colors RGB. The camera may be a monocular camera.

Furthermore, depth information from the flash LIDAR sensor is received, the depth information referring to a second coverage area being smaller than said first coverage area, wherein said first and second coverage areas are overlapping with each other. Preferably, the second coverage area is fully included in the first coverage area. More preferably, the center of first coverage area is arranged in the second coverage area. Most preferably, the second coverage area is centered with respect to the first coverage area.

Based on said image information and said depth information received from flash LIDAR sensor, supervised scene information is established. Said supervised scene information covers said second coverage area.

Supervised scene information is obtained by predicting depth information based on said image information received from the camera and depth information provided by the flash LIDAR sensor using a first trained neural network

The neural network is a first neural network. The neural network is a trained neural network which has been trained in advance using ground truth information provided by a flash LIDAR sensor arrangement comprising multiple flash LIDAR sensors. So, in other words, the neural network may be trained to predict depth information by combining information included in image information and sparse depth information included in the output of flash LIDAR sensor. Because of limited field of view of flash LIDAR sensor, said supervised scene information is limited to said second coverage area which coincides with said limited field of view of flash LIDAR sensor.

In addition, self-supervised scene information is established based on said image information using a second trained neural network. Said neural network providing self-supervised scene information is a second neural network different to the first neural network providing said supervised scene information. Said second neural network is trained differently, namely not based on ground truth information provided by a flash LIDAR sensor arrangement comprising multiple flash LIDAR sensors. In addition, preferably, the second neural network may be run on a different hardware than the neural network providing said supervised scene information. Said self-supervised scene information covers said first coverage area. Said self-supervised scene information includes depth information which is predicted by a depth estimation algorithm by considering information included in said image information provided by the camera using photometric loss and/or structural similarity. The depth estimation algorithm may only use image information for providing depth information of the scene recorded by the camera (vision-only depth estimation) or may additionally use the output of the flash lidar sensor which provides sparse low-resolution depth information (wherein "low-resolution" refers to the resolution of image information which provides higher resolution than the flash LIDAR sensor). For example, sparse low-resolution depth information may comprise a resolution in the range of 1000 to 10000 pixels, specifically in the range of 3000 to 5000 pixels, in particular 128x32, i.e. 4096 pixels.

In a further step, said self-supervised scene information in the first coverage area, preferably in the whole first coverage area, is modified based on supervised scene information such that in the overlapping area between first and second coverage area, the difference between depth information included in self-supervised scene information and depth information included in supervised scene information is reduced. Thereby, modified self-supervised scene information is obtained. So, in other words, in the overlapping area, self-supervised scene information is compared with supervised scene information and self-supervised scene information in the whole first coverage area is varied such that predicted depth information in the second coverage area changes towards depth information included in supervised scene information. Preferably, modified self-supervised scene information includes depth information for each pixel of image information provided by the camera, i.e. for each pixel, information is available how far a certain portion of an object represented by the pixel is away from a reference plane, e.g. a reference plane associated with the camera.

Finally, based on modified self-supervised scene information, modified depth information is provided.

Said method is advantageous because by considering ground truth information provided by a flash LIDAR sensor, a depth estimation process in a limited coverage area is evaluated and information gathered in said limited coverage area is extended to depth information gathered in a greater coverage area thereby being able to supervise a depth estimation algorithm in a greater area than the limited field of view of the flash lidar sensor. Thereby, even when using a single flash lidar sensor in connection with a camera for detecting 3D-information in the surrounding of the vehicle, 3D-object detection in the whole field of view of the camera is possible with high efficiency and high reliability.

According to an embodiment, the step of establishing supervised scene information comprises jointly processing image information included in the second coverage area and depth information provided by the flash LIDAR sensor by a trained neural network and providing depth information which comprises a higher resolution than depth information provided by the flash LIDAR sensor. Thereby, trained neural network provides detailed information regarding the three-dimensional structure of the scene in the second coverage area.

According to an embodiment, establishing self-supervised scene information comprises performing a vision-only depth estimation solely based on features included in said image information or comprises performing a depth estimation algorithm which uses solely image information from the camera in the subarea of first coverage area which does not overlap with second coverage area and which uses image information from the camera and depth information from the flash LIDAR sensor in second coverage area. For example, vision-only depth estimation may evaluate structural image information like edges, neighborhood and/or structural similarity in order to perform depth estimation solely based on visual information provided by the camera. In addition, establishing self-supervised scene information may, in some embodiments, use also depth information provided by the flash LIDAR sensor in order to enhance and/or calibrate self-supervised depth estimation.

According to an embodiment, the step of modifying self-supervised scene information based on supervised scene information comprises calibrating predicted depth information included in self-supervised scene information based on depth information included in supervised scene information. Said calibrating may comprise adapting and/or stretching predicted depth information included in self-supervised scene information such that deviations between self-supervised scene information and supervised scene information is mitigated.

According to an embodiment, the step of modifying self-supervised scene information based on supervised scene information comprises calibrating predicted depth information included in self-supervised scene information also outside said overlapping area between first and second coverage area based on information obtained by a comparison of predicted depth information included in self-supervised scene information and depth information included in supervised scene information within said overlapping area between first and second coverage area. So, in other words, information gathered by comparing supervised scene information and self-supervised scene information is extended to the part of first coverage area which does not overlap with second coverage area. Thereby, predicted depth information can also be corrected in regions which are not covered by the field of view of flash LIDAR sensor.

According to an embodiment, the output of flash LIDAR sensor is provided through an occlusion filtering entity before concatenating the output of flash LIDAR sensor with image information provided by the camera. Thereby, it is possible to determine which surfaces and/or portions of surfaces are not visible from a certain viewpoint, specifically, from the camera's viewpoint.

According to an embodiment, the output of flash LIDAR sensor is projected to a reference plane associated with the camera based on Z-buffer-algorithm. Thereby, information provided by flash LIDAR sensor is transformed to the perspective of the camera.

According to an embodiment, the method comprises the step of determining obstacles or objects in the surrounding of the vehicle based on modified depth information and image information provided by the camera using a neural network. By using modified depth information obtained by upper-mentioned modification of self-supervised scene information based on supervised scene information, the performance and accuracy of determining obstacles or objects, specifically the 3D-shape of obstacles or objects in order to classify said obstacles or objects in traversable and non-traversable ones, is significantly improved.

According to an embodiment, the step of determining obstacles or objects in the surrounding of the vehicle comprises classifying the obstacles or objects into traversable and non-traversable obstacles or objects. Thereby it is possible to decide, if the vehicle can pass a detected object without emergency braking or if the object cannot be traversed without damaging the vehicle and therefore emergency braking is required.

According to an embodiment, the step of determining obstacles or objects in the surrounding of the vehicle is additionally based on reflectance information provided the flash LIDAR sensor. Based on reflectance information it is possible to gather further information of detected objects (e.g. the size of the object, the material of the object and/or surface texture) which can be additionally considered when taking a decision if an object is traversable or not.

According to an embodiment, a neural network configured to provide depth information is trained based on ground truth information provided by a flash LIDAR sensor arrangement comprising multiple flash LIDAR sensors. Based on said multiple flash LIDAR sensors, it is possible to determine ground truth information with higher resolution and/or greater coverage area, thereby having an improved data basis for training said neural network. Specifically, the neural network providing supervised scene information may be trained based on information provided by a flash LIDAR sensor arrangement.

According to an embodiment, during training of a neural network, pixel-wise root mean square error is calculated based on depth information provided at the output of the neural network to be trained and ground truth information provided by said flash LIDAR sensor arrangement. Thereby, depth information provided by the neural network can be checked against ground truth information provided by said flash LIDAR sensor arrangement and parameters of the neural network can be adapted in order to reduce root mean square error.

According to an embodiment, during training of said neural network providing self-supervised scene information, a self-supervised loss indicator is calculated by considering photometric loss and structural similarity. More in detail, said self-supervised loss indicator is calculated by a weighted addition of photometric loss index and structural similarity index and the weighting factors used for calculating self-supervised loss indicator are optimized during training of said neural network. Thereby, self-supervision capabilities of said neural network are improved.

According to an embodiment, the neural network configured for determining obstacles or objects in the surrounding of the vehicle based on modified depth information and image information provided by the camera is trained by reducing classification loss based on ground truth information provided by said flash LIDAR sensor arrangement and/or ground truth information included in a ground truth database. More in detail, the neural network may be trained for classifying obstacles or objects into traversable and non-traversable ones based on annotations included in ground truth information. During said training, parameters of neural network may be adapted such that classification loss between the classification result of neural network and ground truth information is reduced.

Preferably, the training of neural networks is performed in multiple steps, namely, first, training one or more neural networks configured to provide modified self-supervised scene information and, second, training the neural network configured for determining obstacles or objects in the surrounding of the vehicle based on modified depth information and image information.

According to a further aspect, the invention relates to a system for determining three-dimensional image information of a scene in the surrounding of a vehicle. The system comprises a camera and a flash LIDAR sensor. The system is configured to execute the steps of:

- Receiving image information from the camera, said image information referring to a first coverage area;
- Receiving depth information from the flash LIDAR sensor, the depth information referring to a second coverage area being smaller than said first coverage area, said first and second coverage areas overlapping with each other;
- Establishing supervised scene information based on said image information and said depth information, said supervised scene information covering said second coverage area, wherein supervised scene information is obtained by predicting depth information based on said image information received from the camera and the depth information provided by the flash LIDAR sensor using a first trained neural network;
- Establishing self-supervised scene information based on said image information using a second trained neural network, said self-supervised scene information covering said first coverage area, wherein in the self-supervised scene information includes depth information said depth information being predicted by a depth estimation algorithm by considering information included in said image information provided by the camera using photometric loss and/or structural similarity;

- Modifying the self-supervised scene information based on the supervised scene information in the first coverage area such that in the overlapping area between the first and second coverage area, the difference between depth information included in self-supervised scene information and depth information included in supervised scene information is reduced.
- Providing modified depth information based on the modified self-supervised scene information.

Any upper-mentioned feature described as an embodiment of the method is also applicable as a system feature in the system according to the present disclosure.

The term "vehicle" as used in the present disclosure may refer to a car, truck, bus, train or any other crafts.

The term "LIDAR sensor" as used in the present disclosure may refer any sensor which transmits a laser beam and measures reflected portions of said laser beam in order to measure distances.

The term "flash LIDAR sensor" as used in the present disclosure may refer to a LIDAR sensor which illuminates the entire field of view with a wide diverging laser beam in a single pulse or simultaneously emits multiple laser beams in different directions.

The term "depth information" as used in the present disclosure may refer to information regarding the distance of a certain area in the surrounding of the vehicle or sensor with respect to a certain reference point or reference plane.

The term "essentially" or "approximately" as used in the invention means deviations from the exact value by +/- 10%, preferably by +/- 5% and/or deviations in the form of changes that are insignificant for the function and/or for the traffic laws.

Various aspects of the invention, including its particular features and advantages, will be readily understood from the following detailed description and the accompanying drawings, in which:

Fig. 1 shows a road on/at which different obstacles or objects are arranged;

Fig. 2 schematically illustrates two different and overlapping coverage areas, wherein self-supervised scene information is available in first coverage area and supervised scene information is available in second coverage area;

Fig. 3 shows a block diagram of an example system for 3D scene reconstruction in a training setup for training neural networks;

Fig. 4 shows a block diagram of an example system for 3D scene reconstruction in an inference time setup; and

Fig. 5 shows a flowchart illustrating the method steps for determining three-dimensional image information of a scene in the surrounding of a vehicle based on information provided by a camera and a flash LIDAR sensor.

The present invention will now be described more fully with reference to the accompanying drawings, in which example embodiments are shown. The embodiments in the figures may relate to preferred embodiments, while all elements and features described in connection with embodiments may be used, as far as appropriate, in combination with any other embodiment and feature as discussed herein, in particular related to any other embodiment discussed further above. However, this invention should not be construed as limited to the embodiments set forth herein. Throughout the following description similar reference numerals have been used to denote similar elements, parts, items or features, when applicable.

The features of the present invention disclosed in the specification, the claims, examples and/or the figures may both separately and in any combination thereof be material for realizing the invention in various forms thereof.

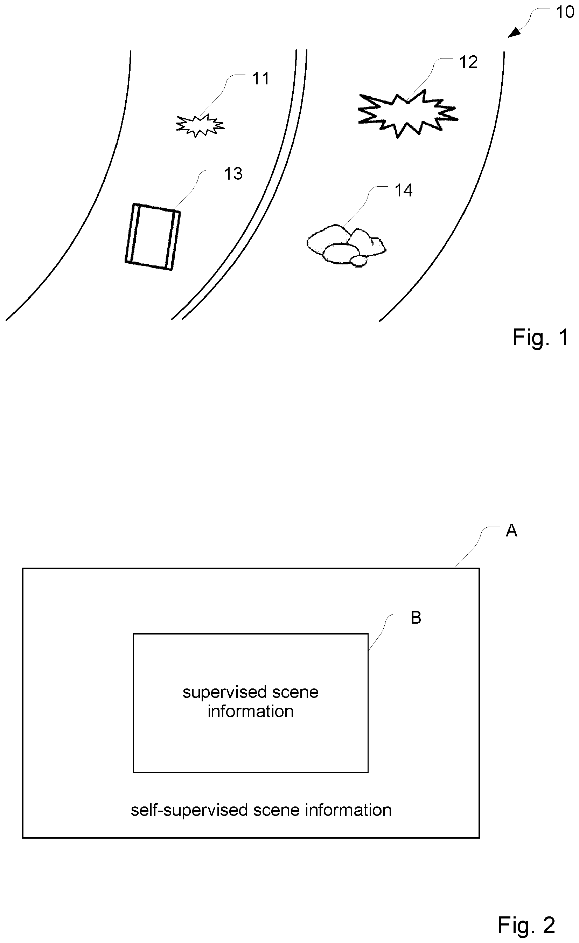

Fig. 1 illustrates a road comprising a pair of lanes. On said lanes, multiple objects are illustrated. For autonomous driving, a classification of objects, into traversable and non-traversable objects is required in order to decide if emergency braking is necessary or the vehicle can pass the object without emergency braking.

In the embodiment of Fig. 1, reference sign 11 refers to a small pothole which can be traversed by a vehicle. However, reference sign 12 refers to a greater pothole which should not be traversed because traversing may cause damages to the vehicle.

Similarly, reference sign 13 refers to a sheet of paper which can be easily traversed whereas reference sign 14 shows some rocks which may cause vehicle damages when being traversed.

In order to determine if a detected object can be traversed or not, i.e. if emergency braking is necessary or not, 3D-information of the respective object is required.

In the following, embodiments of methods and systems for determining 3D-image information based on image information of a camera and depth information provided by a flash LIDAR sensor are described. The camera and the flash LIDAR sensor may be included or attached to a vehicle in order to gather environment information in the surrounding of the vehicle.

Fig. 2 shows an example of a first coverage area A and a second coverage area B which are overlapping. The first coverage area A is associated with the camera 1 and refers to the capturing area of said camera 1. So, in other words, the camera 1 provides image information of the surrounding of the vehicle in said first coverage area A. The camera may be a high-resolution camera comprising a resolution of 1280 x 800 pixel or more. Preferably, the camera 1 may be a monocular camera.

The second coverage area B is associated with the flash LIDAR sensor 2 and refers to the capturing area of said flash LIDAR sensor 2. So, in other words, the flash LIDAR sensor 2 provides information of the surrounding of the vehicle in said second coverage area B. The second coverage area B is smaller than the first coverage area A and overlaps with said first coverage area A. Preferably, the second coverage area B is fully included in said first coverage area A. Most preferably, the second coverage area B is centred or essentially centred with respect to the first coverage area A.

The flash LIDAR sensor simultaneously emits multiple laser beams in different directions (i.e. different azimuth and elevation angle) or a single wide-spread laser beam without using rotating elements like a rotating mirror. The flash LIDAR sensor may comprise a lower resolution than the camera, for example, a resolution of 128 x 32 dots. The flash LIDAR sensor provides information in form of a point cloud. Each point of the point cloud comprises information regarding the distance of the respective object at which the reflection occurs with respect to the flash LIDAR sensor. Said distance information, in the following also referred to as depth information, can be used for determining the 3D-structure of the scene surrounding the vehicle.

Due to the overlapping of first and second coverage area A, B, in the second coverage area B, image information of the camera as well as depth information provided by the flash LIDAR sensor is available. However, in the portion of first coverage area A which does not overlap with second coverage area B, only image information of the camera but no depth information provided by the flash LIDAR sensor is available.

Techniques are known, which enable a vision-only provision of depth information to a 2D image provided by a camera. The depth information is estimated based on a depth estimation algorithm which use structural information included in image information in order to provide depth information. Reference is made to Fangchang Ma, Guilherme Venturelli Cavalheiro, Sertac Karaman, "Self-Supervised Sparse-to-Dense: Self-Supervised Depth Completion from LiDAR and Monocular Camera", ICRA 2019, which describes a method for gathering vision-only depth information by considering change of RGB information in a pair of time frames.

Disadvantageously, the accuracy of estimated depth information solely based on image information of the camera is quite low.

In the overlapping portion of first and second coverage area A, B, different kind of depth information are available, namely, estimated depth information provided by a first neural network which is trained based on ground truth information provided by a multi flash LIDAR sensor arrangement and estimated depth information provided by a second neural network which is trained to provide depth information solely based on visual information provided by the camera or a combination of visual information provided by the camera and information provided by a single flash LIDAR sensor. Depth information provided by the flash LIDAR sensor is more accurate and can therefore be used for improving the accuracy of estimated depth information. More in detail, depth information provided by first and second neural network is combined by spatial matching said different depth information, specifically matching the centres of first and second coverage areas A, B and calibrating and/or stretching estimated depth information such that in the overlapping part, the difference between depth information provided by first and second neural network is minimized. Thereby, not only accuracy of estimated depth information in the overlapping portion of first and second coverage area A, B but also in the non-overlapping portion of first coverage area A (i.e. the frame-like portion of first coverage area A surrounding second coverage area B) is obtained. Thereby, the accuracy of estimated depth information cannot only be enhanced in the overlapping portion but also outside of overlapping portion, i.e. information of flash LIDAR sensor is also effective in areas of image information in which neither - in inference time - information of the single flash LIDAR sensor nor - during training of the first neural network - ground truth information provided by multi flash LIDAR sensor arrangement is available.

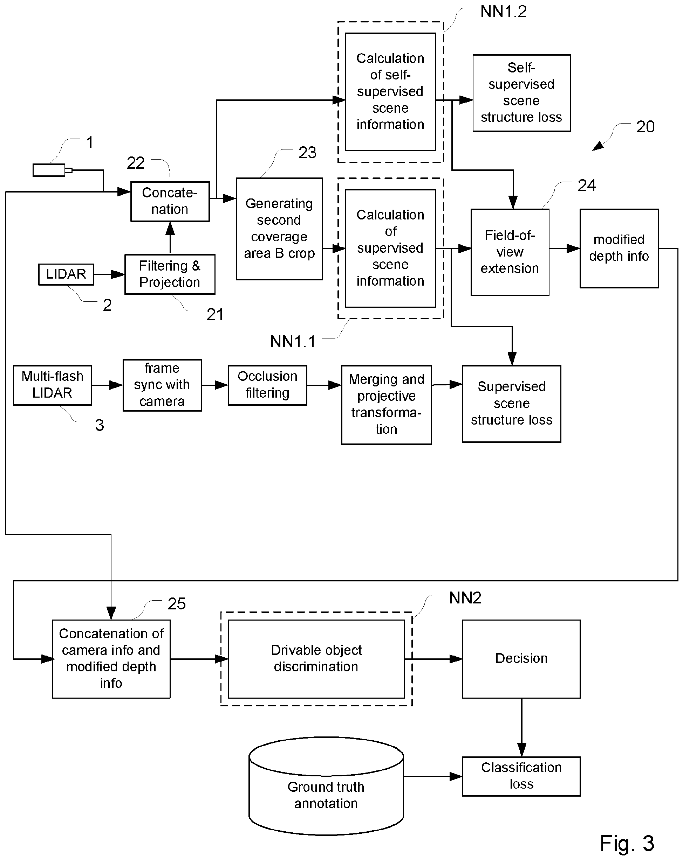

Fig. 3 shows a schematic block diagram of a system 20 for providing depth information to image information of a camera 1 by combining information provided by a camera 1 and a flash LIDAR sensor 2 in training mode, i.e. for training one or more neural networks NN1.1, NN1.2, NN2 included in the system 20.

For training purposes, ground truth information is provided by a flash LIDAR sensor arrangement 3 which comprises multiple flash LIDAR sensors. Preferably, the flash LIDAR sensor arrangement 3 is configured to gather information in the same coverage area as flash LIDAR sensor 2 but with a higher resolution in order to improve the ability to reconstruct precise 3D shapes of the objects on the road. The flash LIDAR sensor arrangement 3 is used for training first neural network NN1.1 which provides supervised scene information. Optionally, the coverage can be increased with additional flash LIDAR sensors or a rotating LIDAR in the training setup. In addition, the flash LIDAR sensor arrangement 3 may provide a higher resolution than flash LIDAR sensor 2. It is worth mentioning that, in preferred embodiments, flash LIDAR sensor arrangement 3 does not comprise a LIDAR sensor with a rotating element, specifically a rotating mirror. The flash LIDAR sensor arrangement 3 may comprise three or more, preferably 5, 6, 7, 8 or even more low-resolution flash LIDAR sensors (exemplary resolution of a single sensor may be 128 x 32) thereby avoiding the rolling-shutter and scanline artifacts of rotating LIDAR sensors and resulting in a uniformly distributed high resolution point cloud.

As shown in Fig. 3, the output of flash LIDAR sensor 2 is provided to a filtering and projection entity 21. The filtering and projection entity 21 is configured to adapt information provided by the flash LIDAR sensor 2 such that a concatenation or fusion with image information provided by the camera 1 can be performed.

More in detail, the filtering and projection entity 21 provides occlusion filtering. First neighbouring points in the point cloud provided by the flash LIDAR sensor 2 may be connected with edges thus creating a mesh surface. For example, this can be done from the perspective of the flash LIDAR sensor 2 by connecting those points which are neighbouring pixels in the 'depth map' representation of information provided by flash LIDAR sensor 2. After building said edges, the points are projected to a reference plane, preferably, a reference plane associated with the camera 1 using the Z-buffer algorithm in order to filter surface occlusions real time. Based on Z-buffer algorithm it is possible to determine which elements of a rendered scene are visible and which are hidden. At the output of the filtering and projection entity 21, at least pixelated depth information is provided which indicates the distance of a scene portion visible from the camera's perspective. Filtering and projection entity 21 may contain intrinsic camera calibration and extrinsic camera-LIDAR calibration thus compensating any offsets of a certain pixel of image information and pixelated depth information provided by flash LIDAR sensor 2. It is worth mentioning, that the resolution of pixelated depth information is different to the resolution of image information provided by camera 1.

The camera 1 may provide pixelated image information comprising RGB information for each pixel. Said image information is concatenated or fused with depth information provided at the output of filtering and projection entity 21 using a concatenating entity 22. The concatenating entity 22 may provide at its output image information and depth information in different channels. Preferably, image information is provided in three channels and depth information is provided in a separate single channel.

The output of concatenating entity 22 is provided to an entity which creates - based on the output of concatenating entity 22 - a crop of information which refers to second coverage area B shown in Fig. 2. So, in other words, entity 23 provides at its output only scene information which refers to second coverage area B. The output of entity 23 is provided to first neural network NN1.1 which - after the training phase - is configured to establish supervised scene information.

Neural network NN1.1 provides supervised scene information which is established using image information of the camera 1 and depth information derived from the output of flash LIDAR sensor 2. As shown in Fig. 2, depth information of flash LIDAR sensor 2 is only available in a second coverage area B. In said second coverage area B, first neural network NN1.1 also predicts depth information based on information included in image information. Said predicted depth information is additionally corrected based on depth information available from flash LIDAR sensor 2. Thereby, in second coverage area, deviations between predicted depth information and depth information obtained from flash lidar sensor 2 can be mitigated. Due to the availability of image information of camera 1 and depth information of LIDAR sensor 2, depth information provided at the output of neural network 1.1 has a high accuracy but is limited to second coverage area B.

The output of concatenating entity 22 is also provided to second neural network NN1.2. Second neural network NN1.2 is trained to provide self-supervised scene information.

The training of second neural network NN1.2 can be obtained in in two different ways. In a first way, second neural network NN1.2 is trained solely based on consecutive frames of image information of the camera 1, i.e. not using depth information obtained from flash LIDAR sensor 2.

In the second way, training is established based on consecutive frames of image information and the information provided by flash LIDAR sensor 2 (e.g. sparse, narrow field-of-view depth information), but without any dense ground information supervision from flash LIDAR sensor arrangement 3. Thus, in the second way of training, said training is only a self-supervised training but no supervised training.

Self-supervised scene information is established over the whole image information provided by the camera, i.e. in first coverage area A. For establishing self-supervised scene information, the change in RGB image information from at least two time frames, preferably, subsequent time frames are used. Optionally, also information provided by flash LIDAR sensor 2 (e.g. sparse, narrow field-of-view depth information) may be used for establishing self-supervised scene information. Again, reference is made to Fangchang Ma, Guilherme Venturelli Cavalheiro, Sertac Karaman, "Self-Supervised Sparse-to-Dense: Self-Supervised Depth Completion from LiDAR and Monocular Camera", ICRA 2019, which describes methods for vision-only depth prediction.

The self-supervised learning method of upper-mentioned referenced paper may be extended with structural similarity index calculated between consecutive image frames, besides the paper's use of photometric loss.

The structural similarity extension enhances depth prediction using information of a flash LIDAR sensor 2 instead of a rotating LIDAR sensor as used in referenced paper because, in contrary to a rotating LIDAR sensor, a flash LIDAR sensor does not provide depth information over the whole horizontal field of view of camera 1. Structural similarity calculation extension makes it possible to make a more accurate warping between two image frames even in large areas missing both input of flash LIDAR sensor 2 and also dense ground truth provided by flash LIDAR sensor arrangement 3.

Self-supervised scene information may provide predicted depth information for each pixel of image information. However, said predicted depth information may suffer from poor accuracy.

In order to combine supervised scene information and self-supervised scene information, field of view-extension is performed by entity 24.

As described before, both supervised learning (using root mean square error (RMSE) on projected ground truth vs predicted pixel distances) and self-supervised learning is used simultaneously. Supervised scene information and self-supervised scene information are used to achieve high resolution flash LIDAR (HFL) Field-of-View extension in the following way.

- The center part of the scene covered by the HFL is trained and predicted with supervised loss only.
- The self-supervision is run on all the picture with the change in RGB information from two time frames as described before.
- The two predictions are combined by matching the center overlapping parts together.
- The self-supervision was designed to be used with no high resolution LIDAR Ground Truth, but is not very accurate. Minimizing the difference between the two predictions results in a new, third result, where the center part of the self-supervised prediction's 3D distances are stretched / calibrated to the accurate distances of the center part, thus improving the outside part's localization as well.

So, based on supervised scene information, it is possible to modify predicted depth information included in self-supervised scene information such that the differences between predicted depth information and depth information included in supervised scene information (obtained by considering information of flash LIDAR sensor 2) are reduced. Said modification of predicted depth information may be obtained by stretching and/or calibrating predicted depth information of self-supervised scene information covering first coverage area A such that predicted depth information of self-supervised scene information are equal or essentially equal to more accurate depth information included in supervised scene information available for second coverage area B. It is worth mentioning that modification of predicted depth information is not limited to said second coverage area but is also effective outside said second coverage area B, specifically over the whole first coverage area A.

In the training phase, self-supervised scene structure loss and supervised scene structure loss is calculated in order to train one or more neural networks. More in detail, supervised scene structure loss is used for training first neural network 1.1 and self-supervised scene structure loss is used for training second neural network 1.2.

Self-supervised scene structure loss is calculated by using structural similarity and photometric loss between consecutive RGB image frames from camera 1 in all of area A, with warping between the two frames optionally aided by sparse input from flash LIDAR sensor 2 but without using any ground truth supervision from flash LIDAR sensor arrangement 3. Said scene structure content may be, for example edges, neighbourhood and/or structural similarity.

Preferably, self-supervised scene structure loss calculation may comprise a weighted combination of photometric loss and structural similarity.

For example, self-supervised loss SSL may be calculated by the following formula:

$$SSL = w_1 \cdot PL + w_s \cdot (1 - SSIM)$$

wherein

PL is photometric loss,
SSIM is structural similarity index and
w1, w2 are weighting factors.

Calculation of photometric loss PL is described in detail by Fangchang Ma, Guilherme Venturelli Cavalheiro, Sertac Karaman, "Self-Supervised Sparse-to-Dense: Self-Supervised Depth Completion from LiDAR and Monocular Camera", ICRA 2019.

Structural Similarity Index SSIM is also calculated between the original and warped image like Photometric Loss's inputs. Calculation of Structural Similarity Index SSIM is described in detail by Wang, Zhou; Bovik, A.C.; Sheikh, H.R.; Simoncelli, E.P. (2004-04-01). "Image quality assessment: from error visibility to structural similarity". IEEE Transactions on Image Processing. 13 (4): 600-612.

The weight terms $w_1$, $w_2$ are hyperparameters and should be optimized for the training.

Supervised scene structure loss is minimized by comparing supervised scene information with ground truth information derived from flash lidar sensor arrangement 3.

For minimizing supervised scene structure loss, the output of flash lidar sensor arrangement 3 may be modified in order to enable a comparison of supervised scene information and ground truth information provided by flash lidar sensor arrangement 3.

As shown in Fig. 3, the output of flash lidar sensor arrangement 3 may be synchronized with information provided by the camera 1. Specifically, frame synchronization between frames of the camera 1 and frames of flash lidar sensor arrangement 3 may be performed. In addition, occlusion filtering may be performed. Said occlusion filtering may be performed similarly as described above in connection with filtering and projection entity 21. Finally, the outputs of said multiple flash LIDAR sensors of the flash lidar sensor arrangement 3 may be merged and transformed into a common reference plane, preferably the reference plane of the camera 1.

During training of first neural network NN1.1, parameters of first neural network NN1.1 are modified such that supervised scene structure loss between the output of first neural network NN1.1 and ground truth information provided by flash lidar sensor arrangement 3 is reduced.

As further shown in Fig. 3, for drivable object determination, modified depth information provided based on supervised scene information and self-supervised scene information may be concatenated with image information provided by camera 1 using concatenating entity 25. Said concatenating entity 25 may receive modified depth information in a first channel and image information in three further channels (e.g. RGB channels). The concatenating entity 25 may further perform an adaption of information to be concatenated or merged, if necessary.

According to embodiments, concatenating entity 25 may further receive reflectance information from flash LIDAR sensor 2 in a further channel. Said reflectance information may include information which is suitable for classifying the object in different object types. For example, based on reflectance information, the size of the object, the material of the object (e.g. stone, metal, etc.) and/or surface texture (e.g. smooth, rough etc.) can be determined.

After concatenating modified depth information, image information of the camera 1 and preferably also reflectance information, concatenated information is provided to a third neural network NN2. Said third neural network NN2 is configured to decide if the vehicle can pass a detected object (traversable object) or not (non-traversable object) and therefore emergency braking is necessary.

The training of neural networks NN1.1, NN1.2, NN2 is performed separately, namely first and second neural network NN1.1, NN1.2 is trained in a first step and third neural network NN2 is trained after finishing training of first and second neural networks NN1.1, NN1.2. During training, the decisions made by third neural network NN2 are compared with annotations available in ground truth information and the classification loss between the output of third neural network NN2 and ground truth information is minimized.

First and second neural networks NN1.1, NN1.2 may comprise an encoder-decoder structure. The third neural network NN2 may comprise a convolutional encoder backbone, which may be similar to neural networks which are used for object detection.

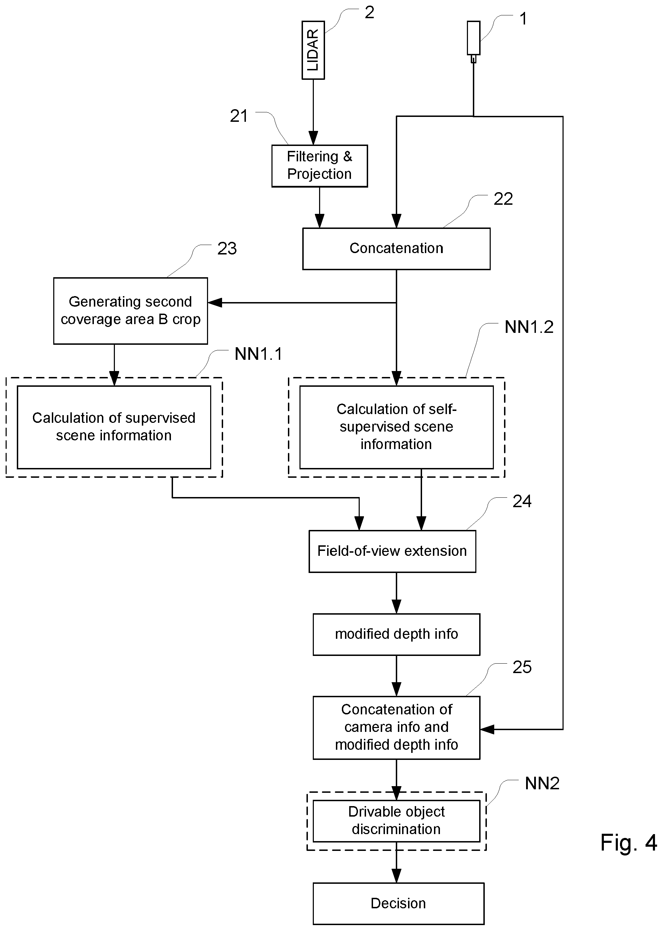

Fig. 4 shows a schematic block diagram of a system for drivable object discrimination in inference time setup, i.e. within a production car where no ground truth information is available from said flash LIDAR sensor arrangement 3 and said first, second and third neural networks NN1.1, NN1.2 and NN2 are already trained.

As described in connection with Fig. 3, the output of flash LIDAR sensor 2 is provided to filtering and projection entity 21 and concatenated with image information provided by the camera 1 in concatenating entity 22.

The output of concatenating entity 22 is provided to first trained neural network NN1.1 via entity 23 which creates a crop of information referring to second coverage area B. First trained neural network NN1 is configured to provide supervised scene information at its output which comprises depth information for second coverage area B at its output.

The output of concatenating entity 22 is further provided to second trained neural network NN1.2. Second trained neural network NN1.2 is configured to provide supervised scene information at its output which comprises depth information for second coverage area B at its output.

In order to combine supervised scene information and self-supervised scene information, field of view-extension is performed by entity 24. Said entity 24 provides at its output modified depth information which is than provided to a further concatenating entity 25 for concatenating modified depth information with image information of the camera 1 (e.g. three channels RGB of camera 1) and preferably reflectance information of the flash LIDAR sensor 2.

The output of further concatenating entity 25 is than provided to the third, trained neural network NN2 which provides object discrimination according to traversable and non-traversable objects.

For further details, reference is made to more detailed description above in connection with Fig. 3.

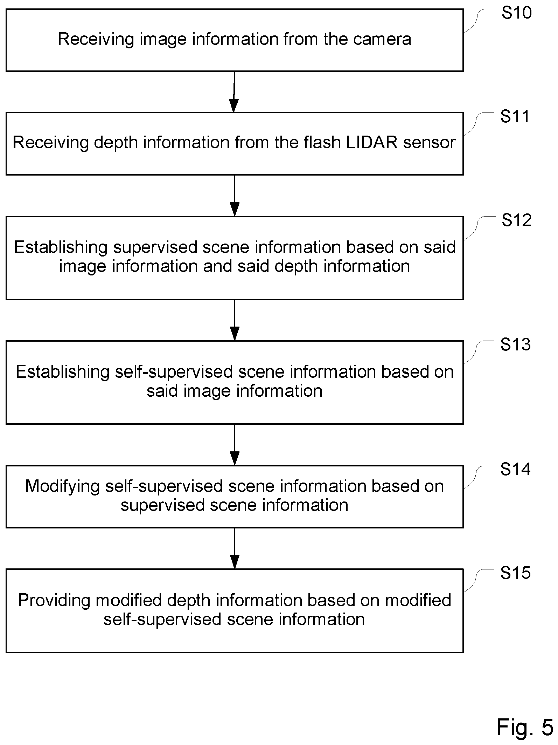

Fig. 5 shows a block diagram illustrating the method steps of a method for determining depth information referring to image information provided by a camera.

As a first step, image information is received from the camera (S10). Said image information refers to a first coverage area A.

In addition, depth information from the flash LIDAR sensor 2 is received (S11). Said LIDAR depth information refers to a second coverage area B which is smaller than said first coverage area A. The first and second coverage areas A, B are overlapping with each other.

As a further step, supervised scene information is established based on said image information and said depth information (S12). Said supervised scene information covers said second coverage area B. Supervised scene information is obtained by predicting depth information based on image information received from the camera 1 and depth information received from the flash LIDAR sensor using a neural network.

Furthermore, self-supervised scene information is established based on said image information using a neural network (S13). Said self-supervised scene information covers said first coverage area A, wherein self-supervised scene information includes depth information, said depth information being predicted by a depth estimation algorithm by considering information included in said image information provided by the camera 1. After establishing supervised scene information and self-supervised scene information, self-supervised scene information is modified based on supervised scene information such that in the overlapping area between first and second coverage area A, B, the difference between predicted depth information and depth information provided by the flash LIDAR sensor 2 is reduced (S14).

Finally, modified depth information is provided based on modified self-supervised scene information (S15).

It should be noted that the description and drawings merely illustrate the principles of the proposed invention. Those skilled in the art will be able to implement various arrangements within the scope of the appended claims that, although not explicitly described or shown herein, embody the principles of the invention.

**List of reference numerals**

1    camera
2    flash LIDAR sensor
3    flash LIDAR sensor arrangement

10    road
11    small pothole
12    great pothole
13    sheet of paper
14    rocks

20    system
21    filtering and projection entity
22    concatenating entity
23    entity for establishing an information crop
24    concatenating entity
25    concatenating entity

A      first coverage entity
B      second coverage entity
NN1.1    first neural network
NN1.2    second neural network
NN2      third neural network

**Claims**

1. Computer-implemented method for determining three-dimensional image information of a scene in the surrounding of a vehicle based on information provided by a camera (1) and a flash LIDAR sensor (2), the method comprising the steps of:

- Receiving image information from the camera (1), the image information referring to a first coverage area (A) (S10);
- Receiving depth information from the flash LIDAR sensor (2), the depth information referring to a second coverage area (B) being smaller than the first coverage area (A), the first and second coverage areas (A, B) overlapping with each other (S1 1);

- Establishing supervised scene information based on the image information and the depth information, the supervised scene information covering the second coverage area (B), wherein the supervised scene information is obtained by predicting depth information based on the image information received from the camera and the depth information provided by the flash LIDAR sensor using a first trained neural network (S12);
- Establishing self-supervised scene information based on the image information using a second trained neural network, the self-supervised scene information covering the first coverage area (A), wherein the self-supervised scene information includes depth information, the depth information being predicted by a depth estimation algorithm by considering information included in the image information provided by the camera (1) using photometric loss and/or structural similarity (S13);
- Modifying the self-supervised scene information based on the supervised scene information in the first coverage area (A) such that in the overlapping area between the first and second coverage area (A, B), the difference between the depth information included in the self-supervised scene information and the depth information included in the supervised scene information is reduced (S14);
- Providing modified depth information based on the modified self-supervised scene information (S15).

2. Method according to claim 1, wherein the step of establishing supervised scene information comprises jointly processing the image information included in the second coverage area (B) and the depth information provided by the flash LIDAR sensor (2) by a trained neural network and providing depth information which comprises a higher resolution than the depth information provided by the flash LIDAR sensor (2).

3. Method according to claim 1 or 2, wherein establishing self-supervised scene information comprises performing a vision-only depth estimation solely based on features included in the image information or comprises performing a depth estimation algorithm which uses solely the image information from the camera (1) in the subarea of the first coverage area (A) which does not overlap with the second coverage area (B) and which uses the image information from the camera (1) and the depth information from the flash LIDAR sensor (2) in the second coverage area (B).

4. Method according to any of the preceding claims, wherein the step of modifying the self-supervised scene information based on the supervised scene information comprises calibrating predicted depth information included in the self-supervised scene information based on the depth information included in the supervised scene information.

5. Method according to any of the preceding claims, the step of modifying the self-supervised scene information based on the supervised scene information comprises calibrating predicted depth information also outside said overlapping area between the first and the second coverage area (A, B) based on information obtained by a comparison of predicted depth information included in the self-supervised scene information and depth information included in the supervised scene information within said overlapping area between the first and the second coverage area (A, B).

6. Method according to any of the preceding claims, wherein the output of the flash LIDAR sensor (2) is provided through an occlusion filtering entity before concatenating the output of the flash LIDAR sensor (2) with the image information provided by the camera (1).

7. Method according to any of the preceding claims, wherein the output of the flash LIDAR sensor (2) is projected to a reference plane associated with the camera (1) based on the Z-buffer-algorithm

8. Method according to any of the preceding claims, comprising the step of determining obstacles or objects in the surrounding of the vehicle based on the modified depth information and the image information provided by the camera (1) using a neural network.

9. Method according to claim 8, wherein the step of determining obstacles or objects in the surrounding of the vehicle comprises classifying the obstacles or objects into traversable and non-traversable obstacles or objects.

10. Method according to claim 8 or 9, wherein the step of determining obstacles or objects in the surrounding of the vehicle is additionally based on reflectance information provided the flash LIDAR sensor (2).

11. Method according to any of the preceding claims, wherein the first neural network configured to provide depth information is trained based on ground truth information provided by a flash LIDAR sensor arrangement (3) comprising multiple flash LIDAR sensors.

12. Method according to claim 11, wherein during training of the first neural network, pixel-wise root mean square error is calculated based on depth information provided at the output of the first neural network to be trained and ground truth information provided by said flash LIDAR sensor arrangement (3).

13. Method according to claim 11 or 12, wherein during training of the second neural network, a self-supervised loss indicator is calculated by considering photometric loss and structural similarity.

14. Method according to any of the preceding claims 11 to 13 referring back to claim 8, wherein the neural network configured for determining obstacles or objects in the surrounding of the vehicle based on the modified depth information and the image information provided by the camera (1) is trained by reducing classification loss based on ground truth information provided by said flash LIDAR sensor arrangement (3) and/or ground truth information included in a ground truth database.

15. System for determining three-dimensional image information of a scene in the surrounding of a vehicle comprising a camera (1) and a flash LIDAR sensor (2), the system being configured to perform the steps of:

- Receiving image information from the camera (1), the image information referring to a first coverage area (A);
- Receiving depth information from the flash LIDAR sensor (2), the depth information referring to a second coverage area (B) being smaller than the first coverage area (A), the first and second coverage areas (A, B) overlapping with each other;
- Establishing supervised scene information based on the image information and the depth information, the supervised scene information covering the second coverage area (B), wherein the supervised scene information is obtained by predicting depth information based on the image information received from the camera and the depth information provided by the flash LIDAR sensor using a first trained neural network;
- Establishing self-supervised scene information based on the image information using a second trained neural network, the self-supervised scene information covering the first coverage area (A), wherein the self-supervised scene information includes depth information, the depth information being predicted by a depth estimation algorithm by considering information included in the image information provided by the camera (1) using photometric loss and/or structural similarity;
- Modifying the self-supervised scene information based on the supervised scene information in the first coverage area (A) such that in the overlapping area between the first and second coverage area (A, B), the difference between the depth information included in the self-supervised scene information and the depth information included in the supervised scene information is reduced.

- Providing modified depth information based on the modified self-supervised scene information.

**Patentansprüche**

**1.** Computerimplementiertes Verfahren zum Bestimmen dreidimensionaler Bildinformationen einer Szene in der Umgebung eines Fahrzeugs auf der Grundlage von Informationen, die von einer Kamera (1) und einem Blitz-LIDAR-Sensor (2) bereitgestellt werden, wobei das Verfahren die folgenden Schritte umfasst:

- Empfangen von Bildinformationen von der Kamera (1), wobei sich die Bildinformationen auf einen ersten Abdeckungsbereich (A) beziehen (S10);
- Empfangen von Tiefeninformationen von dem Blitz-LIDAR-Sensor (2), wobei sich die Tiefeninformationen auf einen zweiten Abdeckungsbereich (B) beziehen, der kleiner ist als der erste Abdeckungsbereich (A), wobei sich der erste und der zweite Abdeckungsbereich (A, B) überlappen (S11);
- Erstellen von überwachten Szeneninformationen auf der Grundlage der Bildinformationen und der Tiefeninformationen, wobei die überwachten Szeneninformationen den zweiten Abdeckungsbereich (B) abdecken, wobei die überwachten Szeneninformationen durch Vorhersage von Tiefeninformationen auf der Grundlage der von der Kamera empfangenen Bildinformationen und der von dem Blitz-LIDAR-Sensor bereitgestellten Tiefeninformationen unter Verwendung eines ersten trainierten neuronalen Netzwerks (S12) erhalten werden;
- Erstellen von selbstüberwachten Szeneninformationen auf der Grundlage der Bildinformationen unter Verwendung eines zweiten trainierten neuronalen Netzwerks, wobei die selbstüberwachten Szeneninformationen den ersten Abdeckungsbereich (A) abdecken, wobei die selbstüberwachten Szeneninformationen Tiefeninformationen aufweisen, wobei die Tiefeninformationen durch einen Tiefenschätzungsalgorithmus vorhergesagt werden, indem Informationen, die in den von der Kamera (1) bereitgestellten Bildinformationen enthalten sind, unter Verwendung von photometrischem Verlust und/oder struktureller Ähnlichkeit (S13) berücksichtigt werden;
- Modifizieren der selbstüberwachten Szeneninformationen auf der Grundlage der überwachten Szeneninformationen in dem ersten Abdeckungsbereich (A), so dass in dem Überlappungsbereich zwischen dem ersten und dem zweiten Abdeckungsbereich (A, B) die Differenz zwischen den in den selbstüberwachten Szeneninformationen enthaltenen Tiefeninformationen und den in den überwachten Szeneninformationen enthaltenen Tiefeninformationen verringert wird (S14);
- Bereitstellen von modifizierten Tiefeninformationen auf der Grundlage der modifizierten selbstüberwachten Szeneninformationen (S15).

**2.** Verfahren nach Anspruch 1, wobei der Schritt des Erstellens überwachter Szeneninformationen das gemeinsame Verarbeiten der in dem zweiten Abdeckungsbereich (B) enthaltenen Bildinformationen und der von dem Blitz-LIDAR-Sensor (2) bereitgestellten Tiefeninformationen durch ein trainiertes neuronales Netzwerk und das Bereitstellen von Tiefeninformationen umfasst, die eine höhere Auflösung aufweisen als die von dem Blitz-LIDAR-Sensor (2) bereitgestellten Tiefeninformationen.

**3.** Verfahren nach Anspruch 1 oder 2, wobei das Erstellen von selbstüberwachten Szeneninformationen das Durchführen einer reinen Sichttiefenschätzung ausschließlich auf der Grundlage von in den Bildinformationen enthaltenen Merkmalen oder das Durchführen eines Tiefenschätzungsalgorithmus umfasst, der ausschließlich die Bildinformationen von der Kamera (1) in dem Teilbereich des ersten Abdeckungsbereichs (A) verwendet, der sich nicht mit dem zweiten Abdeckungsbereich (B) überlappt, und der die Bildinformationen von der Kamera (1) und die Tiefeninformationen von dem Blitz-LIDAR-Sensor (2) in dem zweiten Abdeckungsbereich (B) verwendet.

**4.** Verfahren nach einem der vorhergehenden Ansprüche, wobei der Schritt des Modifizierens der selbstüberwachten Szeneninformationen auf der Grundlage der überwachten Szeneninformationen das Kalibrieren der in den selbstüberwachten Szeneninformationen enthaltenen vorhergesagten Tiefeninformationen auf der Grundlage der in den überwachten Szeneninformationen enthaltenen Tiefeninformationen umfasst.

**5.** Verfahren nach einem der vorhergehenden Ansprüche, wobei der Schritt des Modifizierens der selbstüberwachten Szeneninformation auf der Grundlage der überwachten Szeneninformation das Kalibrieren der vorhergesagten Tiefeninformation auch außerhalb des Überlappungsbereichs zwischen dem ersten und dem zweiten Abdeckungsbereich (A, B) auf der Grundlage von Informationen umfasst, die durch einen Vergleich der vorhergesagten Tiefeninformation, die in der selbstüberwachten Szeneninformation enthalten ist, und der Tiefeninformation, die in der überwachten Szeneninformation innerhalb des Überlappungsbereichs zwischen dem ersten und dem zweiten Abdeckungsbereich (A, B) enthalten ist, erhalten werden.

6. Verfahren nach einem der vorhergehenden Ansprüche, wobei das Ausgangssignal des Blitz-LIDAR-Sensors (2) durch eine Verdeckungsfilterungseinheit bereitgestellt wird, bevor das Ausgangssignal des Blitz-LIDAR-Sensors (2) mit den von der Kamera (1) bereitgestellten Bildinformationen verknüpft wird.

7. Verfahren nach einem der vorhergehenden Ansprüche, wobei der Ausgang des Blitz-LIDAR-Sensors (2) auf der Grundlage des Z-Puffer-Algorithmus auf eine der Kamera (1) zugeordnete Bezugsebene projiziert wird.

8. Verfahren nach einem der vorhergehenden Ansprüche, umfassend den Schritt des Bestimmens von Hindernissen oder Objekten in der Umgebung des Fahrzeugs auf der Grundlage der modifizierten Tiefeninformationen und der von der Kamera (1) bereitgestellten Bildinformationen unter Verwendung eines neuronalen Netzwerks.

9. Verfahren nach Anspruch 8, wobei der Schritt des Bestimmens von Hindernissen oder Objekten in der Umgebung des Fahrzeugs eine Klassifizierung der Hindernisse oder Objekte in überfahrbare und nicht überfahrbare Hindernisse oder Objekte umfasst.

10. Verfahren nach Anspruch 8 oder 9, wobei der Schritt des Bestimmens von Hindernissen oder Objekten in der Umgebung des Fahrzeugs zusätzlich auf Reflexionsinformationen basiert, die der Blitz-LIDAR-Sensor (2) bereitstellt.

11. Verfahren nach einem der vorhergehenden Ansprüche, wobei das erste neuronale Netzwerk, das für das Bereitstellen von Tiefeninformationen ausgebildet ist, auf der Grundlage von Grundwahrheitsinformationen trainiert wird, die von einer Blitz-LIDAR-Sensoranordnung (3) mit mehreren Blitz-LIDAR-Sensoren bereitgestellt werden.

12. Verfahren nach Anspruch 11, wobei während des Trainings des ersten neuronalen Netzwerks der pixelweise mittlere quadratische Fehler auf der Grundlage der am Ausgang des zu trainierenden ersten neuronalen Netzwerks bereitgestellten Tiefeninformationen und der von der Blitz-LIDAR-Sensoranordnung (3) bereitgestellten Grundwahrheitsinformationen berechnet wird.

13. Verfahren nach Anspruch 11 oder 12, wobei während des Trainings des zweiten neuronalen Netzwerks ein selbstüberwachter Verlustindikator berechnet wird, indem der photometrische Verlust und die strukturelle Ähnlichkeit berücksichtigt werden.

14. Verfahren nach einem der vorhergehenden Ansprüche 11 bis 13 unter Bezugnahme auf Anspruch 8, wobei das neuronale Netzwerk, das zum Bestimmen von Hindernissen oder Objekten in der Umgebung des Fahrzeugs auf der Grundlage der modifizierten Tiefeninformationen und der von der Kamera (1) bereitgestellten Bildinformationen ausgebildet ist, durch Reduzieren des Klassifizierungsverlusts auf der Grundlage von Grundwahrheitsinformationen, die von der Blitz-LIDAR-Sensoranordnung (3) bereitgestellt werden, und/oder von Grundwahrheitsinformationen, die in einer Grundwahrheitsdatenbank bereitgestellt werden, trainiert wird.

15. System zum Bestimmen dreidimensionaler Bildinformationen einer Szene in der Umgebung eines Fahrzeugs, das eine Kamera (1) und einen Blitz-LIDAR-Sensor (2) umfasst, wobei das System ausgebildet ist, um die folgenden Schritte auszuführen:

   - Empfangen von Bildinformationen von der Kamera (1), wobei sich die Bildinformationen auf einen ersten Abdeckungsbereich (A) beziehen;
   - Empfangen von Tiefeninformationen von dem Blitz-LIDAR-Sensor (2), wobei sich die Tiefeninformationen auf einen zweiten Abdeckungsbereich (B) beziehen, der kleiner ist als der erste Abdeckungsbereich (A), wobei sich der erste und der zweite Abdeckungsbereich (A, B) überlappen;
   - Erstellen von überwachten Szeneninformationen auf der Grundlage der Bildinformationen und der Tiefeninformationen, wobei die überwachten Szeneninformationen den zweiten Abdeckungsbereich (B) abdecken, wobei die überwachten Szeneninformationen durch Vorhersage von Tiefeninformationen auf der Grundlage der von der Kamera empfangenen Bildinformationen und der von dem Blitz-LIDAR-Sensor bereitgestellten Tiefeninformationen unter Verwendung eines ersten trainierten neuronalen Netzwerks erhalten werden;
   - Erstellen von selbstüberwachten Szeneninformationen auf der Grundlage der Bildinformationen unter Verwendung eines zweiten trainierten neuronalen Netzwerks, wobei die selbstüberwachten Szeneninformationen den ersten Abdeckungsbereich (A) abdecken, wobei die selbstüberwachten Szeneninformationen Tie-

feninformationen aufweisen, wobei die Tiefen-
informationen durch einen Tiefenschätzungsal-
gorithmus vorhergesagt werden, indem Infor-
mationen, die in den von der Kamera (1) bereit-
gestellten Bildinformationen enthalten sind, un-
ter Verwendung von photometrischem Verlust
und/oder struktureller Ähnlichkeit berücksichtigt
werden;
- Modifizieren der selbstüberwachten Szeneninformationen auf der Grundlage der überwachten Szeneninformationen in dem ersten Abdeckungsbereich (A), so dass in dem Überlappungsbereich zwischen dem ersten und dem
zweiten Abdeckungsbereich (A, B) die Differenz
zwischen den in den selbstüberwachten Sze-
neninformationen enthaltenen Tiefeninformati-
onen und den in den überwachten Szeneninfor-
mationen enthaltenen Tiefeninformationen ver-
ringert wird;
- Bereitstellen von modifizierten Tiefeninformationen auf der Grundlage der modifizierten
selbstüberwachten Szeneninformationen.

**Revendications**

1. Procédé mis en oeuvre par ordinateur pour déterminer des informations d'image tridimensionnelle
d'une scène dans l'environnement d'un véhicule sur
la base d'informations fournies par une caméra (1)
et un capteur LIDAR flash (2), le procédé comprenant les étapes suivantes :

- recevoir des informations d'image de la caméra
(1), les informations d'image se rapportant à une
première zone de couverture (A) (S10) ;
- recevoir des informations de profondeur en
provenance du capteur LIDAR flash (2), les informations de profondeur se rapportant à une
deuxième zone de couverture (B) plus petite que
la première zone de couverture (A), la première
et la deuxième zones de couverture (A, B) se
chevauchant l'une l'autre (S11) ;
- établir des informations de scène supervisées
sur la base des informations d'image et des informations de profondeur, les informations de
scène supervisées couvrant la deuxième zone
de couverture (B), les informations de scène supervisées étant obtenues en prédisant les informations de profondeur sur la base des informations d'image reçues de la caméra et des informations de profondeur fournies par le capteur
LIDAR flash à l'aide d'un premier réseau de neurones entraîné (S12) ;
- établir des informations de scène auto-supervisées basées sur les informations d'image à
l'aide d'un deuxième réseau de neurones entraîné, les informations de scène auto-supervisées couvrant la première zone de couverture
(A), les informations de scène auto-supervisées
comprenant des informations de profondeur, les
informations de profondeur étant prédites par
un algorithme d'estimation de profondeur en
considérant les informations incluses dans les
informations d'image fournies par la caméra (1)
à l'aide de la perte photométrique et/ou de la
similarité structurelle (S 13) ;
- modifier les informations de scène auto-supervisées sur la base des informations de scène
supervisées dans la première zone de couverture (A) de sorte que dans la zone de chevauchement entre la première zone de couverture
et la deuxième zone de couverture (A, B), la différence entre les informations de profondeur incluses dans les informations de scène auto-supervisées et les informations de profondeur incluses dans les informations de scène supervisées soit réduite (S14) ;
- fournir des informations de profondeur modifiées sur la base des informations de scène
auto-supervisées modifiées (S15).

2. Procédé selon la revendication 1, dans lequel l'étape
d'établissement des informations de scène supervisées comprend le traitement conjoint des informations d'image incluses dans la deuxième zone de
couverture (B) et des informations de profondeur
fournies par le capteur LIDAR flash (2) par un réseau
de neurones entraîné et la fourniture d'informations
de profondeur qui comprennent une résolution plus
élevée que les informations de profondeur fournies
par le capteur LIDAR flash (2).

3. Procédé selon la revendication 1 ou la revendication
2, dans lequel l'établissement d'informations de scène auto-supervisées comprend l'exécution d'une estimation de profondeur par vision uniquement sur la
base exclusivement des caractéristiques incluses
dans les informations d'image ou comprend l'exécution d'un algorithme d'estimation de profondeur qui
utilise exclusivement les informations d'image de la
caméra (1) dans la sous-zone de la première zone
de couverture (A) qui ne se chevauche pas avec la
deuxième zone de couverture (B) et qui utilise les
informations d'image de la caméra (1) et les informations de profondeur du capteur LIDAR flash (2)
dans la deuxième zone de couverture (B).

4. Procédé selon l'une quelconque des revendications
précédentes, dans lequel l'étape de modification des
informations de scène auto-supervisées sur la base
des informations de scène supervisées comprend
l'étalonnage des informations de profondeur prédites incluses dans les informations de scène auto-
supervisées sur la base des informations de profondeur incluses dans les informations de scène supervisées.

5. Procédé selon l'une quelconque des revendications précédentes, l'étape de modification des informations de scène auto-supervisées sur la base des informations de scène supervisées comprenant l'étalonnage des informations de profondeur prédites également en dehors de ladite zone de chevauchement entre la première zone de couverture et la deuxième zone de couverture (A, B) sur la base des informations obtenues par une comparaison des informations de profondeur prédites incluses dans les informations de scène auto-supervisées et des informations de profondeur incluses dans les informations de scène supervisées à l'intérieur de ladite zone de chevauchement entre la première zone de couverture et la deuxième zone de couverture (A, B).

6. Procédé selon l'une quelconque des revendications précédentes, dans lequel la sortie du capteur LIDAR flash (2) est fournie à travers une entité de filtrage d'occlusion avant de concaténer la sortie du capteur LIDAR flash (2) avec les informations d'image fournies par la caméra (1).

7. Procédé selon l'une quelconque des revendications précédentes, dans lequel la sortie du capteur LIDAR flash (2) est projetée sur un plan de référence associé à la caméra (1) sur la base de l'algorithme du tampon Z.

8. Procédé selon l'une quelconque des revendications précédentes, comprenant l'étape de détermination d'obstacles ou d'objets dans l'environnement du véhicule sur la base des informations de profondeur modifiées et des informations d'image fournies par la caméra (1) à l'aide d'un réseau de neurones.

9. Procédé selon la revendication 8, dans lequel l'étape de détermination des obstacles ou des objets dans l'environnement du véhicule comprend la classification des obstacles ou des objets en obstacles ou objets franchissables et non franchissables.

10. Procédé selon la revendication 8 ou la revendication 9, dans lequel l'étape de détermination des obstacles ou des objets dans l'environnement du véhicule est en outre basée sur les informations de réflectance fournies par le capteur LIDAR flash (2).

11. Procédé selon l'une quelconque des revendications précédentes, dans lequel le premier réseau de neurones configuré pour fournir des informations de profondeur est entraîné sur la base d'informations de vérité terrain fournies par un arrangement de capteurs LIDAR flash (3) comprenant plusieurs capteurs LIDAR flash.

12. Procédé selon la revendication 11, dans lequel, pendant l'entraînement du premier réseau de neurones, l'erreur quadratique moyenne au niveau du pixel est calculée sur la base des informations de profondeur fournies à la sortie du premier réseau de neurones à entraîner et des informations de vérité terrain fournies par ledit arrangement de capteurs LIDAR flash (3).

13. Procédé selon la revendication 11 ou la revendication 12, dans lequel, pendant l'entraînement du deuxième réseau de neurones, un indicateur de perte auto-supervisé est calculé en considérant la perte photométrique et la similarité structurelle.

14. Procédé selon l'une quelconque des revendications précédentes 11 à 13 renvoyant à la revendication 8, dans lequel le réseau de neurones configuré pour déterminer des obstacles ou des objets dans l'environnement du véhicule sur la base des informations de profondeur modifiées et des informations d'image fournies par la caméra (1) est entraîné en réduisant la perte de classification sur la base des informations de vérité terrain fournies par ledit arrangement de capteurs LIDAR flash (3) et/ou des informations de vérité terrain incluses dans une base de données de vérité terrain.

15. Système de détermination d'informations d'une image tridimensionnelle d'une scène dans l'environnement d'un véhicule comprenant une caméra (1) et un capteur LIDAR flash (2), le système étant configuré pour exécuter les étapes suivantes :

- recevoir des informations d'image de la caméra (1), les informations d'image se rapportant à une première zone de couverture (A) ;
- recevoir des informations de profondeur en provenance du capteur LIDAR flash (2), les informations de profondeur se rapportant à une deuxième zone de couverture (B) plus petite que la première zone de couverture (A), la première et la deuxième zones de couverture (A, B) se chevauchant l'une l'autre ;
- établir des informations de scène supervisées sur la base des informations d'image et des informations de profondeur, les informations de scène supervisées couvrant la deuxième zone de couverture (B), les informations de scène supervisées étant obtenues en prédisant les informations de profondeur sur la base des informations d'image reçues de la caméra et des informations de profondeur fournies par le capteur LIDAR flash à l'aide d'un premier réseau de neurones entraîné ;
- établir des informations de scène auto-supervisées basées sur les informations d'image à l'aide d'un deuxième réseau de neurones entraîné, les informations de scène auto-supervisées couvrant la première zone de couverture (A), les informations de scène auto-supervisées comprenant des informations de profondeur, les informations de profondeur étant prédites par un algorithme d'estimation de profondeur en considérant les informations incluses dans les informations d'image fournies par la caméra (1) à l'aide de la perte photométrique et/ou de la similarité structurelle ;

- modifier les informations de scène auto-supervisées sur la base des informations de scène supervisées dans la première zone de couverture (A) de sorte que dans la zone de chevauchement entre la première zone de couverture et la deuxième zone de couverture (A, B), la différence entre les informations de profondeur incluses dans les informations de scène auto-supervisées et les informations de profondeur incluses dans les informations de scène supervisées soit réduite ;

- fournir des informations de profondeur modifiées sur la base des informations de scène auto-supervisées modifiées.

Fig. 1

supervised scene
information

self-supervised scene information

Fig. 2

Fig. 3

Fig. 4

Receiving image information from the camera — S10

Receiving depth information from the flash LIDAR sensor — S11

Establishing supervised scene information based on said image information and said depth information — S12

Establishing self-supervised scene information based on said image information — S13

Modifying self-supervised scene information based on supervised scene information — S14

Providing modified depth information based on modified self-supervised scene information — S15

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020104423 A1
- US 2019362198 A1

**Non-patent literature cited in the description**

- Hybridization of Data and Model based Object Detection for Tracking in Flash Lidars. **SAMAL KRUT-TIPIPTA et al.** 2020 INTERNATIONAL JOINT CONFERENCE ON NEURAL NETWORKS (IJCNN). IEEE, 19 July 2020
- **FANGCHANG MA ; GUILHERME VENTURELLI CAVALHEIRO ; SERTAC KARAMAN.** Self-Supervised Sparse-to-Dense: Self-Supervised Depth Completion from LiDAR and Monocular Camera. *ICRA,* 2019
- **WANG, ZHOU ; BOVIK, A.C. ; SHEIKH, H.R. ; SIMONCELLI, E.P.** Image quality assessment: from error visibility to structural similarity. *IEEE Transactions on Image Processing.,* 01 April 2004, vol. 13 (4), 600-612